# DEMANDE DE BREVET EUROPEEN

(11) **EP 1 089 247 A2**
(43) Date de publication de la demande: **04.04.2001**
(21) Numéro de dépôt: 00560002.8
(22) Date de dépôt: 04.09.2000
(51) Int. Cl.: G09B 21/00

(54) **Système de frappe optique pour les personnes handicapées**

(30) Priorité: 29.09.1999 ES 9902235; 07.01.2000 ES 200000090; 13.01.2000 ES 200000143
(71) Demandeur: Nieto Matos, Miguel, 12003 Castellon (ES)
(72) Inventeur: Nieto Matos, Miguel, 12003 Castellon (ES)

(57) **Abrégé**

Cette invention est un nouveau système de frappe pour les touches ou les claviers. Une touche est un élément sur lequel on appuie afin de mettre en fonctionnement n'importe quel mécanisme ou dispositif électrique, électronique ou mécanique. Grâce à cette invention les personnes dont le handicap atteint les extrémités supérieures peuvent utiliser les pulsateurs, les interrupteurs, les touches, les claviers sans recourir à la mise en mouvement de celles-ci par des moyens mécaniques à l'intérieur de ces éléments. On peut ainsi faire fonctionner les dispositifs, les machines et les mécanismes associés aux interrupteurs, les pulsateurs, les touches ou les claviers des ordinateurs, les téléphones, les machines à écrire, les caisses enregistreuses, les télécommandes, les appareils électroménagers, la machinerie, les sonnettes... etc.

## Description

Cette invention est un nouveau système de frappe pour les touches ou les claviers. Une touche est un élément sur lequel on appuie afin de mettre en fonctionnement n'importe quel mécanisme ou dispositif électrique, électronique ou mécanique. Grâce à cette invention les personnes dont le handicap atteint les extrémités supérieures peuvent utiliser les pulsateurs, les interrupteurs, les touches, les claviers sans recourir à la mise en mouvement de celles-ci par des moyens mécaniques à l'intérieur de ces éléments. On peut ainsi faire fonctionner les dispositifs, les machines et les mécanismes associés aux interrupteurs, les pulsateurs, les touches ou les claviers des ordinateurs, les téléphones, les machines à écrire, les caisses enregistreuses, les télécommandes, les appareils électroménagers, la machinerie, les sonnettes... etc. Les handicapés auront même accès à des postes de travail si on y installe ce système optique. Pour cela il est nécessaire simplement que la personne handicapée, qui ne peut pas employer ses mains o ses bras, puisse faire bouger légèrement la tête; avec ce mouvement elle pourra diriger un rayon de lumière laser provenant de deux dispositifs principaux: d'un côté le récepteur (2) installé dans la touche des appareils ou les touches des claviers et si l'on désire le temporiser on peut le faire à l'aide d'un circuit (8) , d'un autre côté l'émetteur qui se compose des dispositifs (3) ou (20), ces derniers ont été construits avec des circuits (7), (9) et (24) dont nous allons parler tout de suite.

### ANTÉCÉDENTS DE L'INVENTION

L'inventeur ne connaît aucun mécanisme ou système semblable à celui-ci. Il permet d'appuyer sur les touches ou les claviers à l'aide d'un rayon laser, sans employer les extrémités supérieures.

### DESCRIPTION DE L'INVENTION

La base de l'invention se trouve dans le fait de laisser passer le courant électrique entre deux points électriques A et B à l'intérieur d'une touche ou un interrupteur de n'importe quelle machine, appareil électroménager ou les touches d'un clavier (1), tel que le système mécanique de pulsation, grâce auquel on peut laisser passer ou interrompre le courant entre deux points électriques A et B quand on met en contacte ou non un matériel conducteur entre ces points électriques. Dans ce cas, ce système aurait été remplacé par un autre, le système optique (2): quand le courant passe entre ces deux points c'est comme si l'on avait effectué la pulsation d'un interrupteur ou une touche. Pour obtenir ce résultat sans actionner cette touche ou interrupteur nous devrons substituer tout le système d'actionnement mécanique de l'interrupteur, nous réserverons simplement sa carcasse extérieure où, après l'avoir forée, nous installerons un récepteur de lumière (4) en connectant chacun des deux terminaux du composant à chacun des contactes électriques A et B (2) à l'intérieur de la touche. Une fois le inséré et son côté récepteur envisagé vers l'extérieur, nous allons profiter des caractéristiques de la conduction électrique que ce photocomposant possède, car il est sensible à la lumière, en faisant varier sa résistance interne ceci fera varier l'intensité du courant qui circule entre les terminaux A et B selon la quantité de lumière qu'il recevra. Pour la construction de cette invention on va utiliser le photodiode (4.1) ou la résistance variable avec la lumière (4.2) qui s'appelle aussi LDR. Comme ces photocomposants ont chacun deux terminaux C et D (4) ils pourront être accouplés directement sur les contactes A et B (5) de chaque touche sans que des circuits additionnels soient nécessaires. Dans les occasions où l'on aurait besoin d'une amplification de la lumière reçue par le dispositif (3) ou (20), on substituera le photodiode (4.1) ou la résistance variable avec la lumière (4.2) par un phototransistor (18) dont on expliquera le processus plus tard. Il faudra utiliser des circuits additionnels que l'on appelle circuit de maintien de la touche spéciale (8), dans le cas des touches qui devraient être activées et maintenues dans cet état pour leur combinaison avec d'autres touches ou quand on aurait besoin de maintenir un courant d'intensité beaucoup plus élevé de ce que le photorécepteur pourrait supporter directement. Celui-ci n'est pas le cas d'un clavier d'ordinateur où le courant qui passe par les terminaux de ses touches est très faible; par contre c'est le cas d'un ventilateur ou d'une poêle car nous devrions intercaler le circuit (8) si nous voulons une activation temporelle, ou intercaler le circuit (8.2) si nous voulons que le dispositif soit connecté jusqu'au moment où nous voudrions le déconnecter. Dans le cas du clavier d'ordinateur nous allons insérer les circuits associés aux touches spéciales seulement dans le cas où le clavier avec le système mécanique n'ait pas prévu le maintien pour l'activation de cette touche et que ceci soit nécessaire pour que celui-ci fonctionne opérationnellement. Si le clavier avec un système mécanique a prévu le maintien des touches, nous garderons ce maintien même si on substitue ce système mécanique (1) par le système optique (2) sans avoir besoin d'employer plus de circuits.

### COMMENT CONSTRUIRE LE SYSTÈME DE PULSATION OPTIQUE (2).

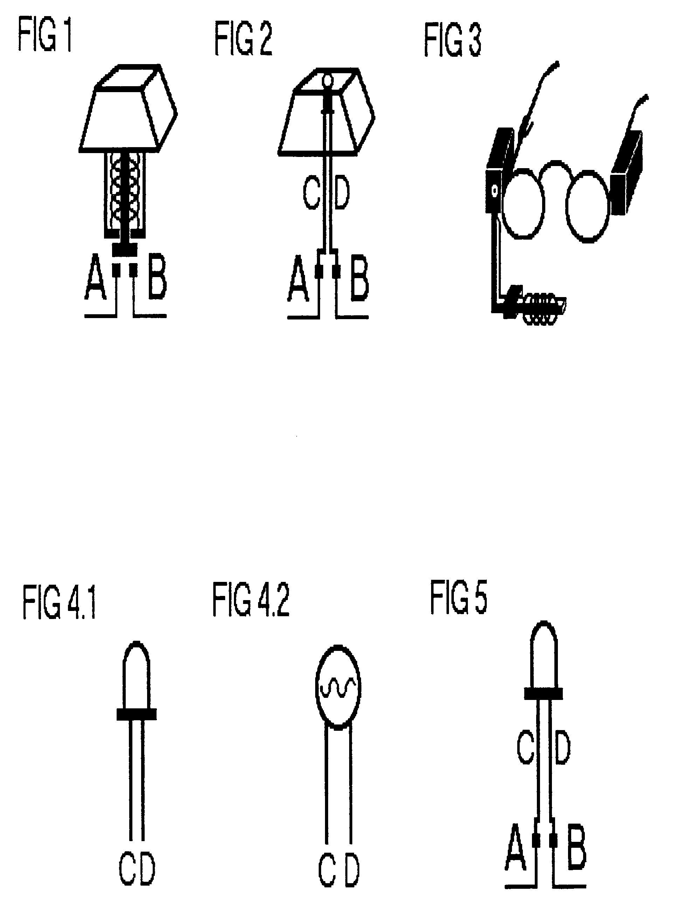

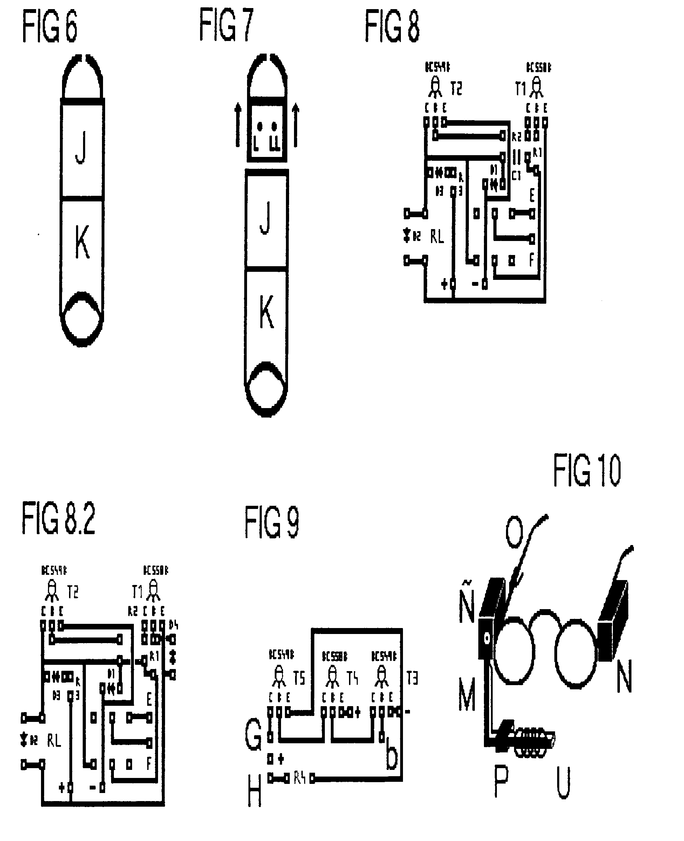

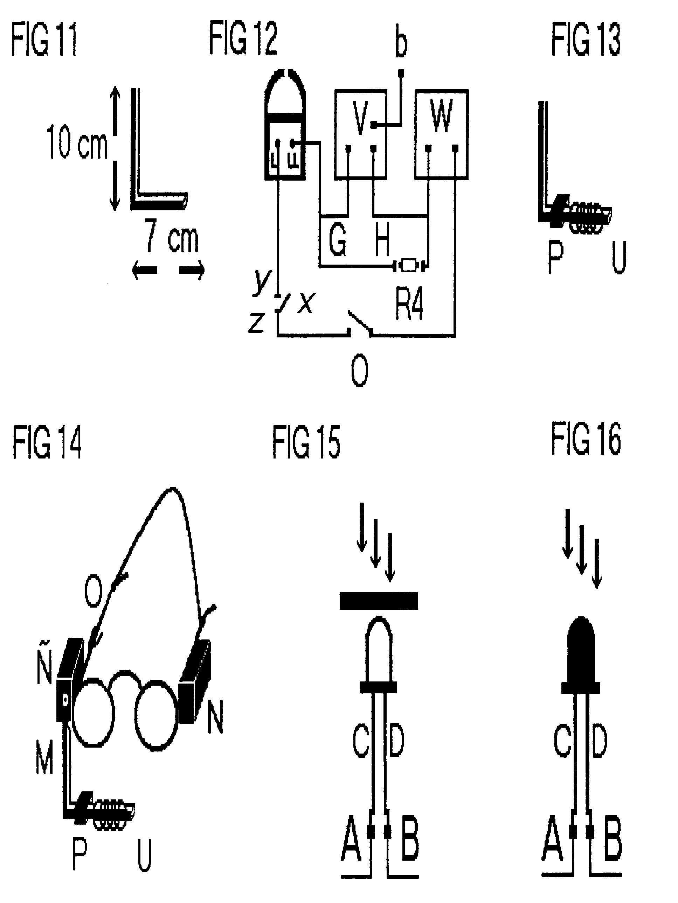

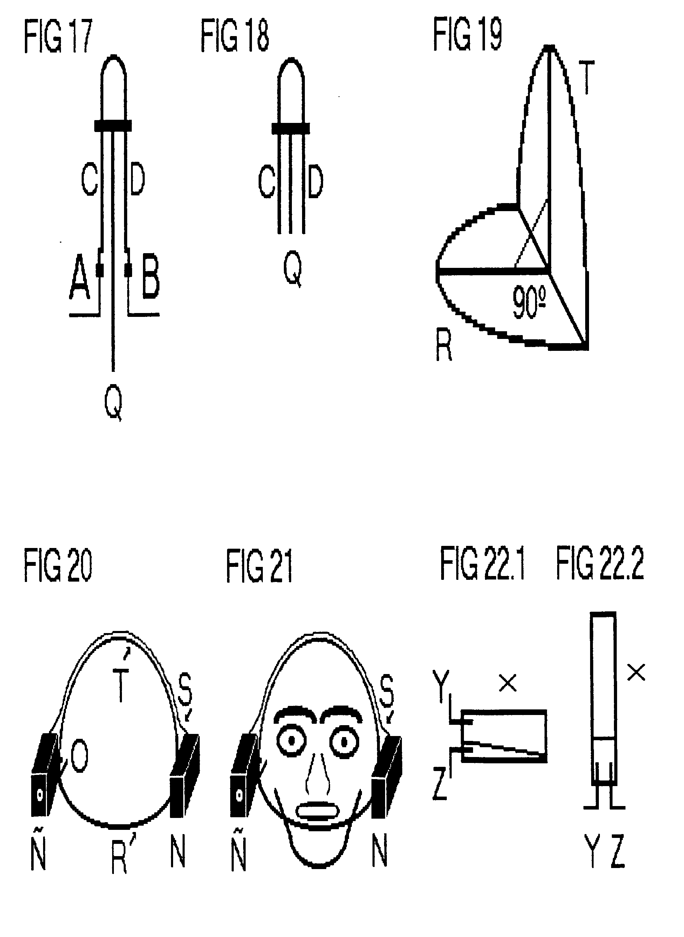

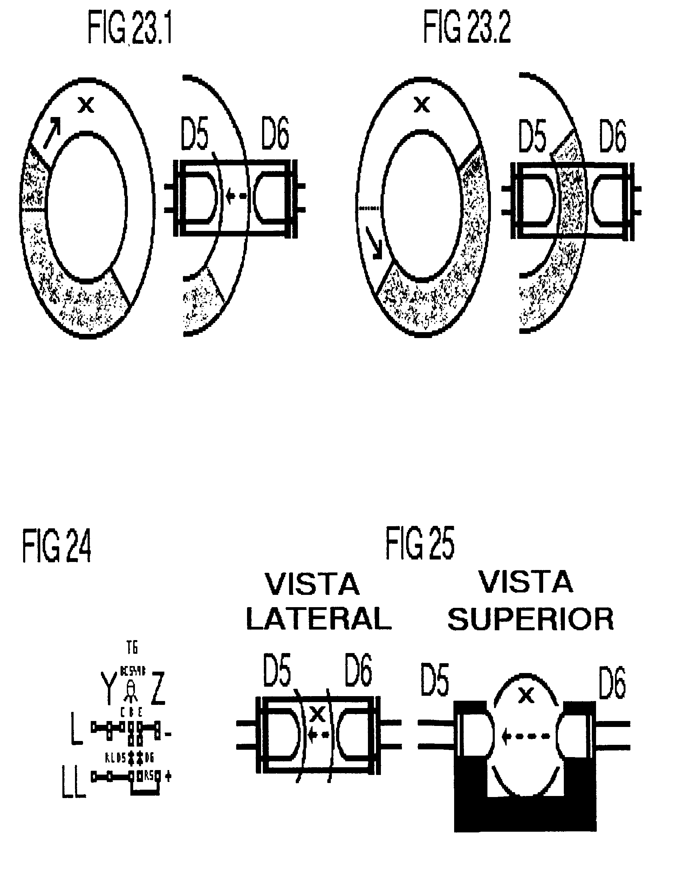

Pour construire un clavier optique nous devons éliminer le système mécanique de chaque touche qui permet le contacte électrique A et B (1) grâce à une pulsation mécanique. Après avoir éliminé ce système il y aura de la place pour y insérer un photocomposant (4) à l'intérieur de la carcasse de cette touche car les contactes A et B (1) seront libres. Pour réaliser cette opération il est nécessaire de forer la carcasse en faisant un trou qui varie entre 3 ou 5 mm de diamètre selon la mesure du photocomposant qu'on va y insérer. Une fois le photocomposant logé à l'intérieur de la carcasse de la touche, son côté récepteur placé dans l'orifice et orienté vers l'extérieur du clavier, nous allons procéder à l'union des terminaux C et D (4) du photocomposant avec les contactes électriques A et B (5). Il est possible que le dispositif où l'on va procéder à la substitution du système de pulsation (1) par celui de la figure (2) contienne des touches dont la carcasse aurait la même mesure que le photocomposant qu'on doit y insérer - par exemple les touches de quelques commandes à distance. Dans ce cas nous éliminerons toute la touche, même la carcasse, pour procéder à l'insertion directe du photocomposant. Une autre possibilité serait d'appliquer directement les photocomposants dans un panneau de la mesure désirée, rejetant ainsi la carcasse originaire du clavier, nous pourrons, donc, garder ou ne pas garder le système mécanique originaire tout comme le système optique de chaque touche que nous venons de décrire.

### FONCTIONNEMENT DU CIRCUIT QUI FAIT POSSIBLE LE MAINTIENT DES TOUCHES SPÉCIALES (8).

Nous devrons installer ce circuit dans les touches que l'on appelle spéciales existant dans n'importe quel type de clavier sur lesquelles il faudrait maintenir la pulsation pour les combiner avec d'autres touches. Nous prendrons comme exemple le clavier d'un ordinateur dont nous allons remplacer le système de pulsation mécanique (1) par celui de pulsation optique (2). Le clavier de l'ordinateur a ces touches installées : BLOQUE NUMÉRIQUE, BLOQUE MAJUSCULES, BLOQUE DÉPLOYÉ. Celles-ci ont été installées à l'usine pour que l'on puisse les maintenir actives tout le temps désiré. Par contre les touches ALT, CONTROL, ALT GR, et LA FLÈCHE À DOUBLE LARGEUR VERS LE HAUT, elles sont actives seulement quand on les appuie. Pour les personnes qui ne sont pas handicapées le fait d'activer ces dernières touches en combinaison avec d'autres ne représente aucune difficulté mais pour les personnes qui, effectivement, le sont ceci est difficile, voilà pourquoi il est nécessaire d'installer le circuit dont nous avons parlé (8) car ce sera grâce à lui que nous pourrons maintenir la touche active pendant le temps désiré et pouvoir ainsi la combiner avec d'autres. Nous allons décrire ce système tout de suite.

### LE FONCTIONNEMENT DU CIRCUIT DE MAINTIEN DE LA TOUCHE SPÉCIALE (8)

Si nous connectons les terminaux de sortie E et F du circuit (8) avec les terminaux A, B (1) de n'importe quelle touche spéciale nous pourrons la maintenir appuyée tout le temps désiré. Pour cela nous allons diriger le rayon de lumière laser du dispositif lié à la tête de la personne handicapée (3) ou (20) une seule fois au photocomposant récepteur du circuit (8). Grâce à cela nous allons activer la touche qui restera active et nous pourrons la combiner avec d'autres touches de type normal. Après quelque temps la touche va se désactiver automatiquement. On a prévu une autre version du circuit (8), le circuit (8.2) qui permettra que la touche reste active indéfiniment jusqu'à ce qu'on lui donnera l'ordre pour devenir inactive.

### CONSTRUCTION DU CIRCUIT DE MAINTIEN DE LA TOUCHE SPÉCIALE (8)

### (UN CIRCUIT POUR CHAQUE TOUCHE SPÉCIALE)

### COMPOSANTS NÉCESSAIRES:

1 Transistor T1, BC558B, PNP.
1 Transistor T2, BC549B, NPN
1 Résistance R1, 1/8 w, 47k
2 Résistances R2 et R3, 1/8 W, 100.
1 Relais de 6v, deux inverseurs
1 Photodiode, D1, récepteur, 3 ou 5 mm
1 Diode D2, 1N4007.
1 Diode lumineux du type LED, D3, de 3 ou 5 mm
1 Condensateur, C1, 47 uF/16 V
1 Plaque l'un de ses côtés en cuivre et l'autre en plastique, fibre ou bakélite de 4 cm de large et 4 cm de long.
2 Câbles de fil électrique d'un mm de diamètre. Ils seront aussi longs qu'on voudra, ils seront destinés aux terminaux de sortie de la touche qui nous intéresse.
2 Câbles aussi longs qu'on voudra pour les terminaux d'alimentation Vcc= 4.5 V, de fil électrique d'un mm de diamètre.
1 boîte de matière résistante tel que le bois ou le plastique de 5 cm de long, 5 cm de large et 5 cm de haut.

### COMMENT MONTER LE CIRCUIT DE MAINTIEN DE LA TOUCHE (8)

On va monter les composants selon le schéma (8). D'abord nous allons dessiner les pistes et les signaux de foreuse d'un mm qui apparaissent dans le schéma avec un feutre à l'encre indélébile sur la feuille en cuivre. Ceci fait, nous allons introduire la plaque sur laquelle nous venons de faire le dessin dans une solution qui contiendra 50% d'eau-forte et 50% d'eau oxygénée. Il ne restera que le cuivre ayant été protégé par l'encre du feutre, c'est-à-dire, les pistes et les signaux de foreuse. Après nous allons éliminer l'encre avec un bout de coton trempé en alcool et nous allons forer les lieux signalés, souder les composants selon le schéma. Une fois cette opération terminée nous allons connecter les câbles d'alimentation aux Vcc 4.5 V, et les correspondants terminaux de sortie E F (8) vont être soudés aux terminaux AB (1) de la touche sur laquelle nous travaillons. Nous introduirons ce circuit dans une boîte de matière résistante dont une possibilité serait le bois ou le plastique. Elle aura 5 cm de longueur, 5 cm de largeur et 5 de hauteur. Dans son côté frontal -qui limitera avec le toit du relais- il faudra forer deux trous de 3 ou 5 mm de diamètre pour ouvrir une fenêtre où l'on installera le photodiode récepteur D1, qui recevra le rayon du dispositif (3) ou (20) chargé d'activer la touche connectée au circuit pendant 15 secondes plus ou moins. Nous pouvons varier ce délai en changeant les valeurs R1 et C1. Si nous avons choisi la version du circuit (8.2) la touche, au lieu de se maintenir activée pendant quelque temps elle le fera indéfiniment jusqu'à ce qu'elle recevra l'ordre de désactivation. L'autre orifice permettra que le diode lumineux D3 puisse s'y installer. S'il se trouve illuminé, la touche à la quelle le circuit (8) ou (8.2) est associé sera toujours active. La construction et le fonctionnement de la version (8.2) sera la même que celle de (8) excepté que nous devrons éliminer le condensateur C1, aménager un pont entre ses terminaux et insérer un photocomposant récepteur D4 entre le terminal base de T1 et la polarité +. Grâce à cela si D1 reçoit un rayon de lumière laser le dispositif (3) ou (20) activera le circuit et par conséquent la touche qui est en connectée avec lui. Si le rayon de lumière est reçu par D4 le circuit et la touche se déconnecteront. Nous allons forer une troisième fois dans la même boîte, à une certaine distance des autres deux trous afin de pouvoir y installer D4. Une autre façon de déconnecter le circuit (8.2) est en substituant le diode photorécepteur D4 du circuit 8.2) et le remplacer par les câbles qui sont liés aux contactes normalement déconnectés du relais d'un autre circuit (8), de sorte que nous produirions la connexion du circuit (8). Nous produirions la connexion de la touche que nous voudrons en visant le laser vers le diode récepteur D1 du circuit ( 8.2 sans D4) et la déconnexion de la touche en visant le laser vers le diode récepteur D1 du circuit (8,0) grâce auquel nous avons élaboré un ensemble de connexion et de déconnexion. Nous pourrons utiliser le dispositif (8) ainsi que le dispositif (8.2) pour maîtriser des touches indépendantes telles que l'interrupteur de la lumière, celui d'un ventilateur ou d'autres dispositifs pour laisser passer ou pas le courant électrique par les extrêmes des terminaux des touches ou de la touche qui les contrôlent.

### FONCTIONNEMENT DE L'ÉMETTEUR DE LUMIÈRE LASER ACCOUPLÉ AU DISPOSITIF (3)

Ni les mesures ni les matériaux seront déterminants pour la fabrication de ce dispositif. Les matériels que l'on expose ici ne sont qu'une possibilité comme une autre. Son structure est un simple squelette de lunettes pour la vue à graduation normal. Sur une de ses branches latérales nous allons installer le circuit électronique (7) grâce auquel nous émettrons un rayon de lumière laser qui dans un premier moment ne sera qu'un rayon d'intensité très faible -celui-ci va nous servir comme point de repère afin de cibler l'objectif- et après, une fois que la touche ait été ciblée le rayon émettra une lumière grâce à l'activité d'un circuit commutateur électronique (9) ou simplement avec un interrupteur mécanique situé à sa place, avec une intensité de lumière laser plus élevée ce sera possible d'activer la touche qui nous intéresse. Ce dispositif sera doué d'un mécanisme nommé « dispositif de sécurité » qui permettra de la déconnecter automatiquement par niveau (22). Ce dispositif sert à empêcher que les autres personnes puissent être éblouies ou aveuglées par le dispositif qui émet le laser; il pourra être employé aussi pour activer ou désactiver n'importe quelle machine, dispositif, ou appareil électroménager selon l'inclinaison de la tête de l'usager. Nous allons expliquer ce dispositif en détail dans les pages suivantes.

### FONCTIONNEMENT DU CIRCUIT COMMUTATEUR DE LUMIÈRE LASER (9)

Ce circuit va permettre que l'émetteur laser ait une intensité à puissance limitée ou bien accéder à toute la puissance dont elle dispose dans les batteries ou dans une source d'énergie électrique. Pour passer d'un état à l'autre simplement il sera nécessaire de toucher légèrement, avec les lèvres ou les parties proches à elles, la partie dénuée d' un câble ou fil métallique situé près de la bouche, M(10) dont la partie finale sera enroulée sous forme de spiral U (13). Ce circuit pourra être substitué par un interrupteur ou commutateur mécanique qui sera situé dans le même lieu et fera la même fonction que le circuit. (9)

### CONSTRUCTION DU CIRCUIT COMMUTATEUR DE LUMIÈRE LASER (9).

### COMPOSANTS NÉCESSAIRES:

2 Transistors T3, T4,BC549B, NPN
1 Transistor T5, BC558B,PNP.
1 Résistance R4, 1/8 W, 180.

### COMMENT MONTER LE CIRCUIT COMMUTATEUR DE LUMIÈRE LASER (9).

Il n'est pas nécessaire de construire ce circuit sur une planche en cuivre si on ne le veut pas. On peut souder directement les terminaux des composants du circuit (9) et après les regrouper sous une forme cylindrique idéale pour introduire le circuit (9) dans le propre émetteur laser, dans la partie K(6), étant donné que cet émetteur laser peut être du type cylindrique (7). On utilise l'espace qui nous permet d'extraire les petites batteries dont ces émetteurs laser disposent étant donné que le dispositif (3) va se nourrir de trois batteries plus grandes du type R6 ou semblable, situées dans leur correspondant porte-batteries qui se trouve installé dans la branche des lunettes du côté opposé N (10) à celle de émetteur laser N (10). Avant d'introduire le circuit (9) on devra isoler avec une colle thermofusible toutes les parties du circuit (9) qui pourraient produire des courts-circuits indésirables avec la base métallique du compartiment K(7)

### CONSTRUCTION DU DISPOSITIF (3) -POUR LE FIXER A LA TÊTE-

### COMPOSANTS NÉCESSAIRES:

1 Support du type L
1 Poussoir d'accouplement O(12)
1 Circuit Commutateur (9)
1 Squelette de lunettes de vision à graduation normale
1 Dispositif émetteur laser du type baguette cylindrique ou semblable qui émette une lumière laser du type 1, 2 ou 3A
1 Bout de fil métallique ou de câble isolé extérieurement- mais à caractère conducteur et malléable à l'intérieur -il doit être dénudé d'un cm dans les deux extrêmes- M (10).
1 Porte-batteries pour trois unités R6
2 Boîtes de matière résistante, en bois ou en plastique, l'une d'entre elles légèrement plus grande par rapport à la mesure de l'émetteur laser et une autre légèrement plus grande que le porte-batteries pour couvrir les câbles provenant des différentes connexions du schéma du circuit (12) qui d'autre façon se verraient. Cela devra être installé dans le dispositif (3) ou (20). Dans le schéma du circuit (12) s'établissent les correspondances suivantes V= circuit commutateur (9) W= le porte-batteries et X= dispositif de sécurité avec une déconnexion automatique par niveau, et Z et Y les terminaux du dispositif de sécurité.
1 Dispositif de sécurité avec une déconnexion automatique de niveau (22) ou (23)

### COMMENT MONTER LE DISPOSITIF (3)

On montera correctement le circuit (9) à l'intérieur de l'émetteur cylindrique laser. D'abord on devra séparer la partie du circuit électrique où se trouve le diode laser en le démontant par devant (7) et en séparant le compartiment J7 pour ainsi pouvoir souder des câbles d'alimentation au circuit à L et LL (7), car, comme nous avons dit avant, les petites batteries qui se trouvent dans le compartiment K (7), après avoir introduit le circuit (9) vont être éliminées pour laisser de la place. Du côté postérieur de K (7) sortiront alors trois câbles: deux d'alimentation connectés à L et à LL (7) par un de leurs extrêmes et à G H (9) par l'autre, le troisième câble sera connecté à b (9) et à la première des nudités du câble de 20 cm -l'autre sera le plus près possible de la bouche. Le troisième câble serait collé au support L (11) qui servira de guide au câble et qui, lui aussi serait collé à la boîte qui protège l'émetteur laser Ñ(10). Tout le fil conducteur qui restera à la fin sera dénudé et se fera tourner en spirale U (13) à la fin du support L (11), le plus proche possible des lèvres mais sans qu'il arrive a les toucher car l'usager pourra faire possible la commutation avec un mouvement de ses lèvres seulement quand il voudra. On va insérer un tampon fait d'une matière isolante P(13) entre la spirale de câble dénudé U(13)- qui fait possible la commutation- et la partie du câble où se trouve la matière isolante. Si on ne mettait pas ce tampon il n'y aurait pas une limite et la lèvre toucherait toujours la spirale U(13), et le circuit serait toujours en train d'émettre la lumière laser au maximum de puissance. Tous les éléments qui composent le dispositif (3) ou (20) peuvent être liés au squelette des lunettes avec une colle thermofusible.

L'alimentation du dispositif (3) ou (20) fonctionnera automatiquement quand l'usager mettra le dispositif (3) ou (20) dans sa tête, grâce au pulsateur O (10) qui se trouve à côté de la boîte de l'émetteur laser N (10). Celui-ci se met à fonctionner quand il contacte l'os temporal de la tête au moment de mettre le dispositif (3) et il se déconnectera quand l'usager l'enlèvera de la tête. L'alimentation proviendra du porte-batteries avec un câble parallèle qui sera fixé à la partie supérieure du squelette des lunettes de forme analogue à la figure S (20) . Pour mieux fixer le dispositif (3) à la tête on y ajustera un cordon élastique (14) qui unira les deux branches par derrière ce qui permettra un meilleur attachement du dispositif (3). Dans ce dispositif (3) on pourra installer les batteries dans une autre part ou l'alimenter dès le réseau avec un adaptateur pour que les lunettes ne deviennent pas trop lourdes.

### DEUXIÈME VERSION DU DISPOSITIF

### SUPPORT À DOUBLE DIADÈME A 90 ° POUR DIRIGER LE RAYON DE LUMIÈRE LASER. (19).

### COMPOSANTS NÉCESSAIRES

1 Pulsateur d'accouplement O (12)
1 Circuit commutateur (9)
1 Dispositif émetteur laser du type baguette cylindrique ou semblable qui émette une lumière laser du type 1, 2 ou 3A
1 Bout de fil métallique ou de câble de 10 cm isolé extérieurement- mais à caractère conducteur- et malléable à l'intérieur, il doit être dénudé d'un cm dans les deux extrêmes M (10).
1 Porte-batteries pour trois unités R6
2 Boîtes de matière résistante, en bois ou en plastique, l'une d'entre elles légèrement plus grande par rapport à la mesure de l'émetteur laser et une autre légèrement plus grande que le porte-batteries pour couvrir les câbles provenant des différentes connexions du schéma du circuit (12) qui d'autre façon se verraient. Cela devra être installé dans le dispositif (3) ou (20). Dans le schéma du circuit (12) s'établissent les correspondances suivantes V= circuit commutateur (9) W= le porte-batteries et X= dispositif de sécurité avec une déconnexion automatique par niveau, et Z et Y les terminaux du dispositif de sécurité.
1 Dispositif de sécurité avec une déconnexion automatique de niveau (22) ou (23)
2 diadèmes l'une dans une matière isolante T (19), l'autre d'une matière conductrice T (20) unies dans leurs extrêmes avec un vis et un écrou d'assemblage. Grâce à ce système d'assemblage on aura un parfait accouplement sur la tête.

### COMMENT MONTER LA DEUXIÈME VERSION DU DISPOSITIF (3) FIGURE (20)

Nous allons expliquer une deuxième version du dispositif (3) avec laquelle nous pourrons diriger un rayon de lumière laser avec la tête vers le système de pulsation (2). Il consiste à assembler les deux diadèmes pour fixer le système à la tête (19) en formant un angle de 90° entre elles. L'une d'entre elles sera d'une matière isolante T (19), sur elle on va fixer un émetteur laser Ñ (10) avec le circuit commutateur (9), dont nous avons déjà parlé, dans le côté droit (20), et dans le côté gauche nous allons placer le porte-batteries N (10) en unissant la partie gauche et la droite avec le câble d'alimentation S (20). Ce câble sortira du porte-batteries en longeant la partie supérieure de l'arc formé par la diadème T(20), il s'accouplera à la partie droite aux terminaux + et - du circuit (9). L'autre diadème sera en matière conductrice. Elle sera disposée horizontalement au menton de l'usager. Cette dernière diadème aura la mission de recevoir le contacte du lèvre pour qu'il se produise la commutation de l'émetteur laser. C'est ainsi que l'émetteur laser changera sa lumière laser faible - qui sert à repérer le dispositf- par une lumière laser plus intense -qui active le dispositf- Pour le reste, aussi bien la position de l'interrupteur O(10) et le schéma électrique (12) que le fonctionnement du dispositif 20 seront identiques au dispositif (3); Après avoir procédé à son montage et une fois mis sur la tête, le résultat final est tel qu'on le montre dans la figure (21). Dans ce dispositif (20) on pourra installer les batteries dans une autre part ou les alimenter dès le réseau avec un adaptateur pour que le dispositif (20) ne devienne pas trop lourd. Le circut (9) peut être substitué par un interrupteur ou pour un commutateur mécanique, dans ce cas-là il ne sera plus nécessaire que l'une des diadèmes soit d'un matériel conducteur électrique.

### CONDITIONS POUR LE FONCTIONNEMENT ET L'ILLUMINATION DE L'INVENTION.

S'il y a dans l'environnement une illumination modérée sans que celle-ci tombe directement sur le système optique (2) il fonctionnera correctement avec un émetteur de lumière laser du type 1 ou 2, mais si l'endroit où le système (2) doit fonctionner était énormément illuminé ou s'il y avait un jet de lumière qui tombait directement sur le système (2) on devra protéger le système (2). Il existe deux façons d'atteindre ce but (15) (16): La première (15) consiste à couvrir avec du plastique, du cristal, du tissu ou un matériel semblable d'une couleur foncée le photorécepteur de chaque touche du système (2). La deuxième consiste à le peindre avec de l'encre le composant photorecepteur. La couleur de l'encre sera plus claire ou plus foncée selon la quantité de lumière environnante que l'on désire éliminer; il faut se rendre compte que pour l'activation de la touche avec système (2) il faut rappeler qu'une certaine quantité de lumière provenant du dispositif (3) ou (20) doit pouvoir passer. En plus de ces protections on pourra intercaler entre l'extrême ou les extrêmes des photo composants une ou plusieurs résistances afin d'éliminer une partie du courant électrique en trop dû à la lumière de l'environnement et à d'autres facteurs. Si les protections contre la lumière de l'environnement (15), (16) sont très fortes, on devra substituer émetteur laser du type 2 par un autre du type 3. Si malgré cela la quantité de lumière provenant du dispositif (3) ne peut pas traverser les protections (15), (16) on devra substituer le photodiode (4,1) ou la LDR (4.2) du système (2) par un photo-transistor (18) qui ait la même mesure et qui occupe la même place à l'intérieur de la touche. Il y aura seulement une différence: il y aura encore un autre terminal nommé Q (17) qui sera connecté à A ou B (1), selon le sens du courant qui se dirige vers A ou B1, c'est à dire, que A soit + ou que ce soit B qui le soit. Ceci peut être testé à l'aide d'un appareil pour mesure l'électricité car chaque circuit électronique où l'on changera le système de pulsation (1) par le système (2) peut avoir une configuration différente. Il viendra s'ajouter à cette connexion une résistance pour protéger le terminal base du photo-transistor. Il va dépendre aussi de ce facteur le choix du type de phototransistor (18) NPN ou PNP avec lequel nous obtiendrons l'amplification, avec celui qui est connecté au circuit (17), de la lumière qui pourra franchir les protections (15), (16). Si nous n'avons pas ces protections et que nous voulons activer une touche en utilisant le système (2) avec une source de lumière faible et sans les interférences de la lumière de l'environnement nous pourrons atteindre une plus grande efficace au moment d'éliminer la lumière de l'environnement si nous intercalons un filtre de fréquence dans le photorécepteur. Ce filtre se composera de l'association de résistances, de condensateurs et/ou de bobines selon la fréquence choisie. Nous pouvons aussi intercaler directement un composant de filtre de cristal, nommé normalement quartz. Si nous choisissons ce système de filtres le dispositif émetteur laser aura aussi un oscillateur intercalé entre les terminaux de son alimentation pour qu'il transmette le rayon laser dans la fréquence dont le filtre a besoin.

### DISPOSITIF DE SÉCURITÉ AVEC DÉCONNEXION AUTOMATIQUE PAR NIVEAU (22) ou (23)

### VERSION MÉCANIQUE OU OPTIQUE

Ce dispositif devra être accouplé à côté du porte-batteries N ou à l'intérieur de la boîte Ñ qui couvre l'émetteur laser des dispositifs (3) ou (20), ou bien dans n'importe quel autre lieu où il puisse être incliné. Il agira en mécanisme de sécurité au cas où la tête de l'usager avec le dispositif (3) ou (20) atteigne un niveau d'inclination vers le bas ou quand il cible ou il regarde le clavier ou la touche avec un système optique (2) qui a substitué le système mécanique. De cette façon on va permettre aux dispositifs (3) ou (20) d'émettre la lumière laser dont ils sont capables mais, par contre on ne va pas permettre que ces dispositifs puissent émettre lumière laser si la tête atteint un niveau qui dépasse les degrés établis. Nous allons empêcher ainsi que l'usager puisse aveugler ou éblouir les personnes avec la lumière laser quand il regardera en face de lui. Néanmoins on peut configurer ce dispositif (22) ou (23) autrement et nous pourrons appliquer d'autres fonctions. Nous l'expliquerons tout de suite.

### DISPOSITIF AVEC CONNEXION OU DÉCONNEXION PAR NIVEAU PENDANT UN TEMPS DÉTERMINÉ.

Nous pouvons permettre que le laser s'active en inclinant la tête vers le bas ou vers le haut, vers la droite ou vers la gauche ou dans d'autres directions et qu'il soit activé seulement pendant quelque temps, même quand on lèvera la tête. Nous atteignons ceci en intercalant le circuit (8) de sorte que la personne handicapée ou non disposera d'un temps d'émission laser pour activer ou désactiver n'importe quel dispositif ou appareil électroménager où l'on aurait installé l'adaptation du système de pulsation optique.

### DISPOSITIF AVEC DÉCONNEXION OU CONNEXION PAR NIVEAU POUR LE CONTROL DE QUELQUES FONCTIONS OU DIRECTIONS

Si on le désire on pourra aussi installer autant de dispositifs (22 ou 23) que de fonctions à contrôler: nous pourrons ainsi maîtriser la direction d'un siège roulant électrique ou la souris d'un ordinateur; Pour cela nous installerons un dispositif (22 ou 23) pour chaque fonction à contrôler dans (3) ou (20) ou dans un autre dispositif qui puisse s'incliner -par exemple une manette qui puisse pivoter comme celle des jeux vidéo - afin de détecter l'inclination de la tête, d'une autre partie du corps u d'un autre mécanisme où il puisse être installé pour qu'il se produise ensuite l'activation ou désactivation correspondant au circuit ou circuits que l'on veut contrôler. C'est à dire, pour pouvoir contrôler le fait qu'un siège roulant ou une souris d'ordinateur tourne à droite nous devrons disposer d'un dispositif (22) ou (23) installé dans la partie droite du dispositif (3) ou (20) qui va détecter cette inclination. Il faudra faire le même pour détecter les autres directions. En tout ce serait 4 circuits pour contrôler 4 directions, un circuit pour chacune d'elles. Mais dans le cas du dispositif ou circuit optique (23) on peut contrôler les 4 directions seulement avec 2 circuits (23), un circuit contrôlerait les directions droite et la gauche et l'autre en haut et en bas (devant ou derrière). Nous pouvons obtenir cela en employant deux paires -au lieu d'un seul- d'un diode émetteur et un autre récepteur dans le récipient circulaire du dispositif (23). Une paire dans un extrême et l'autre dans l'autre extrême de sorte que quand la tête s'inclinera vers un endroit concret ce sera une paire qui s'activera et quand elle s'inclinera vers le côté opposé ce sera l'autre paire composée, elle aussi, par un diode émetteur et récepteur. Si on voulait contrôler plus d'événements ou de degrés d'inclination de la tête, par exemple le contrôle électronique de l'inclinaison d'un véhicule qui monte et qui descend par un terrain incliné, nous utiliserons autant de paires émetteur-récepteur installées dans le récipient que de sauts d'inclinaison à contrôler.

### DISPOSITIF POUR CONTRÔLER LES DIFFÉRENTES DIRECTIONS OU ÉVÉNEMENTS PAR NIVEAU D'INCLINATION INSTALLÉ DANS UN LIEU DIFFÉRENT À CELUI DU DISPOSITIF (3) OU (20).

Son fonctionnement serait le même que pour 1' installation des dispositifs (3) ou (20) sauf pour l'exclusion des squelettes -les lunettes ou les diadèmes dont nous avons parlé avant- car nous rassemblerions les composants du mécanisme dans une petite boîte indépendante avec les mesures appropriés pour l'installer dans la partie du corps que l'on voudra, par exemple le poignet de l'usager. Dans cette petite boîte nous installerons le mécanisme d'émission laser, qui a été déjà décrit, ainsi que celui de contrôle du niveau atteint dans les différentes versions dont nous avons parlé de sorte que de la boîte sortira ce laser, s'activant ou pas, avec le mouvement de du poignet ou un autre lieu quelconque et pouvoir atteindre le niveau d'inclination du bras ou un autre lieu pour après cibler l'endroit qui nous intéresse ou bien, dans le cas où on n'installerait pas l'émetteur dans cette petite boîte, contrôler les différents événements, directions ou degrés d'inclination: il n'est pas nécessaire que la petite boîte soit liée forcément au corps humain, c'est le cas de la manette des jeux vidéo qui pivote sur elle même, elle peut être fixée dans n'importe quelle autre machine, véhicule ou mécanisme, etc. qui s'inclinait toute seule, de sorte que nous saurions combien de degrés s'est elle inclinée et dans quelle direction l'a-t-elle fait.

### DISPOSITIF DE SÉCURITÉ AVEC DÉCONNEXION AUTOMATIQUE PAR NIVEAU (22).

### VERSION MÉCANIQUE.

Ce dispositif est basé dans la conductibilité de quelques liquides. Pour cela nous introduirions du liquide conducteur dans un récipient cylindrique de quelques 5 cm. de large et 1 cm de diamètre -ces mesures ne sont qu'un exemple car elles ne sont pas absolument nécessaires pour que le système fonctionne, elles sont nécessaires seulement à cause de l'espace dont on a besoin pour installer ce mécanisme dans les dispositifs (3) ou (20)-, le niveau du liquide dans le récipient devra être l'approprié pour qu'il se produise la connexion et déconnexion du circuit auquel nous allons le connecter avec les degrés d'inclination qu'on désire. Pour qu'il puisse se produire cette connexion on va insérer les terminaux YZ (22) qui vont traverser le bouchon du récipient X(22). Le courant va passer entre ces deux terminaux. Ceci arrivera quand la partie du compartiment où se trouvent ces terminaux sera inondée par le liquide conducteur. Ce liquide touche au même temps les deux terminaux en produisant une continué de courant entre eux. Ceci arrive quand le dépôt X (22.2) qui contient le liquide oscille vers le bas. Tout ce système se trouve sur la tête de l'usager. Quand le dispositif (3) ou (20) est installé sur la tête de l'usager, quand celle-ci bougera vers le haut le liquide conducteur se déplacera en s'éloignant d'un ou des deux terminaux ZY (22.1). En ce moment la continuité qui existait entre eux s'arrêtera et le circuit auquel se trouvait connecté ce dispositif de sécurité s'arrêtera. Comme il existe dans le marché un autre dispositif sous le nom "interrupteur de mercure", déjà dans le commerce, qui pourrait remplacer ce mécanisme de sécurité avec déconnexion automatique de niveau, l'inventeur ne veut pas revendiquer ce système dans sa version mécanique (22.1) (22.2), néanmoins nous avons voulu décrire son fonctionnement pour mieux comprendre le système dans son ensemble. La non-revendication se rapporte exclusivement au récipient cylindrique avec les électrodes à l'intérieur, mais par contre l'inventeur voudra revendiquer le système de sécurité de déconnexion automatique par niveau dans sa version optique sous la forme d'un cercle (23) ainsi que les dispositifs de sécurité ou de contrôle de direction ou fonction avec connexion ou déconnexion automatique ou temporisée, déjà décrit, et qui a été construit dans l'ensemble formé par les dispositifs (3 ou 20) avec (22 ou 23).

### FONCTIONNEMENT DU DISPOSITIF DE SÉCURITÉ AVEC DÉCONNEXION AUTOMATIQUE PAR NIVEAU (23)

### VERSION OPTIQUE

Il est basé sur la possibilité qu'un photodiode D5 (24) reçoive ou non de la lumière. Cette lumière arrivera au photodiode si le niveau de liquide opaque, disposé à l'intérieur du récipient cylindrique à forme circulaire qui le contient, le permet. Cet événement se produit quand le dispositif (3) ou (20), fixé à la tête de l'usager (23.1) s'incline vers une direction. Quand ce liquide se déplacera il laissera libre un vide dans le récipient qui le contient de sorte que le récipient qui le contient deviendra transparent dans cet endroit. Ce sera justement par cet endroit par lequel le diode émetteur D6 (24) enverra un rayon de lumière au photodiode D5 (24). Au moment où D5 (24) recevra cette lumière le circuit (24) sera activé ainsi que celui qui est connecté avec lui ou bien directement celui qui est connecté au circuit (22 ou 23). Quand le dispositif (3) ou (20), qui est fixé à la tête, s'inclinera dans la direction contraire à l'antérieure le liquide opaque bougera aussi en direction contraire (23.2) à l'antérieure (23.1). Le récipient cylindrique et transparent X (23) de quelques 5 cm de long et 1cm de diamètre, sera construit sous la forme d'un cercle. Ces mesures ne sont qu'un exemple car elles ne sont pas absolument nécessaires pour que le système fonctionne, elles sont nécessaires seulement à cause de l'espace dont on a besoin pour installer ce mécanisme dans les dispositifs (3) ou (20). Il n'est pas nécessaire que le liquide soit conducteur mais opaque et surtout qu'il ne laisse pas des résidus sur les parois du récipient X (23) quand il bougera. Le niveau de ce liquide doit être suffisant pour qu'il se produise la connexion et la déconnexion du circuit sur lequel nous allons le placer en employant les degrés d'inclinaison désirés de sorte qu'il puisse se produire cette connexion. On va y insérer correctement le diode émetteur D6 (24) et le diode récepteur D5(24) groupés à l'intérieur d'un support sous la forme de U (25) qui aura deux orifices et qui permettra la sortie ou l'entrée de lumière seulement à travers la partie frontale de D5 (25) et D6 (25) et qui couvrira le reste de ces diodes pour que la lumière de l'environnement ne les abîme pas. Grâce au support sous la forme de U situé tel qu'un anneau (25) pour accoler et fixer le récipient circulaire X (23) qui contient le liquide opaque. Quand la tête avec le dispositif (3) ou (20) s'inclinera vers le haut ou vers une toute autre direction, si on situe le récipient dans la direction sélectionnée, le liquide opaque changera de place (23.2) et la fenêtre par laquelle on recevait la lumière D5 provenant de D6 se voilera de sorte que le courant s'arrêtera et le circuit (24) ainsi que celui qui était connecté au circuit de sécurité (23) se déconnecteront.

## Revendications

1. **Système de pulsation optique (2) de n'importe quelle touche ou clavier**. Nous définissons «touche» comme un élément sur lequel on appuie pour actionner, mettre en fonctionnement ou arrêter n'importe quel mécanisme, dispositif ou circuit électronique, électrique ou mécanique. Le système de pulsation que l'inventeur revendique se caractérise parce qu'il atteint l'effet de pulsation de la touche, les touches ou les interrupteurs par substitution du système mécanique (1), ou semblable, par le système optique (2) dont nous avons déjà parlé.

2. **Support pour la tête (3)**. Il se caractérise parce qu'il a été construit avec le squelette des lunettes pour la vue et les composants dont on a déjà parlé. Grâce à ce support il est possible qu'une personne ayant un handicap dans les extrémités supérieures -ou non- puisse diriger avec la tête un rayon de lumière laser indépendant et individuel vers chacune des touches d'un clavier ou vers une touche d'un dispositif ou appareil électroménager dans lequel on aurait substitué le système mécanique de pulsation (1) par le système optique (2) dont nous avons parlé.

3. **Support pour la tête (20)**. Il se caractérise parce qu'il a été construit à partir de l'union de deux diadèmes ou deux demi-cercles, l'une d'une matière isolante et l'autre d'une matière conductrice ou non -liées dans leurs bases par un système tel qu'un vis et un écrou pour permettre la mobilité et l'adaptation à la tête en formant un angle de 90°- ainsi que d'autres éléments dont nous avons déjà parlé. Grâce à ce support il est possible qu'une personne ayant un handicap dans les extrémités supérieures -ou non- puisse diriger avec la tête un rayon de lumière laser indépendant et individuel vers chacune des touches d'un clavier ou vers une touche d'un dispositif ou appareil électroménager dans lequel on aurait substitué le système mécanique de pulsation (1) par le système optique (2) dont nous avons parlé.

4. **Circuit pour maintenir la pulsation de la touche (8)**. Il se caractérise parce qu'il rend possible maintenir l'effet de l'activation de la touche qui connectera n'importe quel type de machine, appareil électroménager ou circuit pendant un temps établit pour faire ainsi possible la combinaison avec une deuxième touche ou simplement comme un moyen de temporiser cette touche et maintenir le fonctionnement du dispositif, appareil ou circuit pendant quelque temps.

5. **Circuit pour maintenir la pulsation de la touche (8.2)**. Il se caractérise parce qu'il rend possible maintenir l'effet de l'activation de la touche que nous connecterons indéfiniment jusqu'à ce que l'usager décidera de la désactiver. Avant qu'il ne se produise cette désactivation l'usager pourra combiner cette touche avec d'autres ou simplement la maintenir active jusqu'à ce qu'il voudra. Elle sera déconnectée à travers le circuit (8) ou indépendamment.

6. **Dispositif de sécurité en forme circulaire avec déconnexion automatique par niveau, version optique (23)** qui se caractérise parce que son fonctionnement a comme base un dépôt circulaire et transparent à l'intérieur duquel il existe un liquide opaque grâce auquel on va permettre la déconnexion ou la connexion des dispositifs (3) ou (20) ou n'importe quel autre type. Ceci va permettre qu'un photodiode composant récepteur de lumière D5 (24) excite ou non un circuit amplificateur (24) ou un autre circuit connecté. Quand la tête de l'usager atteindra un degré vers une direction établie le liquide opaque voilera le photodiode récepteur en déconnectant le dispositif (3) ou (20) ou celui avec lequel il serait connecté. Quand la tête s'inclinera de nouveau vers le clavier afin d'y cibler quelque touche -ou une autre touche ou interrupteur de n'importe quel autre appareil- avec le système optique (2) le photodiode récepteur se dévoilera en permettant ainsi que le dispositif de la tête s'active de nouveau.

7. **Circuit de commutation d'intensité de la lumière laser (9)**. Il se caractérise parce qu'il permet de commuter un état de faible intensité de lumière laser par un état de haute intensité de lumière laser. Ceci est possible quand cette lumière est émise par le dispositif (3) ou (20).

8. **Ensemble** qui se caractérise parce qu'il est crée à partir de l'association des dispositifs (3 ou 20) avec les dispositifs (22 ou 23). Grâce à cet ensemble on pourra connecter ou non par niveau atteint à travers ou non des circuits (8) afin de temporiser ou, circuit (8.2), pour travailler avec des courants plus forts n'importe quel appareil ou circuit qui serait connecté avec cet ensemble ou permettre le passage d'un courant plus élevé par n'importe quel appareil ou circuit qui serait connecté avec cet ensemble. Nous atteignons ainsi la connexion ou déconnexion automatique du dispositif (3) ou (20) fixé à la tête (Émetteur Laser) ou bien le contrôle de n'importe quel dispositif grâce à l'inclination de la tête vers la direction valable ou de toute une autre partie du corps où les dispositifs (22 ou 23) soient installés, comme par exemple pour contrôler la direction d'un siège roulant ou de la souris d'un ordinateur -où l'on installerait autant de dispositifs (22 ou 23 ) que de directions ou d'événements à contrôler.

9. **Dispositif de contrôle d'événements ou d'adresses par niveau atteint installé dans des lieux différents aux dispositifs (3) ou (20).** Il se caractérise parce qu'il a été construit grâce à l'assemblement des mécanismes de connexion ou de déconnexion par niveau mécanique (22) ou optique (23) dans une petite boîte qui ait les dimensions correctes pour être installée dans quelque lieu ou bien dans une partie du corps à l'aide d'une petite courroie ou d'un autre dispositif quelconque. Ce dispositif pourra disposer ou non du mécanisme d'émission laser pour pouvoir après cibler, dès l'endroit où il se trouvera -par exemple le poignet de quelqu'un ou bien une manette qui puisse pivoter comme celle des jeux vidéo- le dispositif que nous voudrons activer ou désactiver. Nous pourrons contrôler les appareils connectés à cette boîte par niveau de façon indépendante du contrôle qu'on puisse atteindre avec le mécanisme interne de la propre manette. En plus la petite boîte pourra être placée dans n'importe quel lieu ou partie d'une machine, d'une voiture... etc., peu importe que cet endroit soit fixe ou qu'il bouge, et contrôler ainsi son inclination à un moment donné et activer ou non les dispositifs qui vont se connecter ou se déconnecter quand on atteindra ou non le niveau ou les niveaux dont nous avons parlé. Pour ce dernier il faudrait installer autant de paires d'activation qui se composent d'un émetteur et d'un récepteur de lumière que d'événements à contrôler dans un même récipient ou en combinaison avec d'autres.
